# FASCICULE DE BREVET EUROPEEN

(11) **EP 1 653 073 B1**
(45) Date de publication et mention de la délivrance du brevet: **12.12.2007**
(21) Numéro de dépôt: 05292149.1
(22) Date de dépôt: 13.10.2005
(51) Int. Cl.: F02K 1/80

(54) **Tuyère à section variable de turbomachine**
Schubdüse mit veränderlichem Querschnitt für Turbomaschine
Variable area nozzle for turbomachine

(30) Priorité: 29.10.2004 FR 0411574
(43) Date de publication de la demande: 03.05.2006
(73) Titulaire: SNECMA, 75015 Paris (FR)
(72) Inventeur: Dakowski, Mathieu, 94370 Sucy en Brie (FR); Lapergue, Guy, 77950 Rubelles (FR); Lunel, Romain, 77550 Moissy Cramayel (FR); Sevi, Guillaume, 94200 Ivry-sur-Seine (FR)
(74) Mandataire: Joly, Jean-Jacques

(56) Documents cités:
- EP-A- 1 503 068
- EP-A1- 1 333 172
- PATENT ABSTRACTS OF JAPAN vol. 2003, no. 06, 3 juin 2003 (2003-06-03) -& JP 2003 056404 A (ISHIKAWAJIMA HARIMA HEAVY IND CO LTD), 26 février 2003 (2003-02-26)

## Description

### Arrière-plan de l'invention

La présente invention se rapporte au domaine général des tuyères à section variable pour turbomachines, et concerne plus particulièrement les tuyères constituées par une pluralité de volets mobiles formant une couronne.

Dans une architecture conventionnelle de tuyère à section variable de turbomachine, la tuyère est notamment constituée d'une couronne de volets mobiles qui sont montés dans le prolongement d'un carter annulaire de la turbomachine.

Les volets mobiles sont actionnés par un système de commande de façon à modifier le profil du flux primaire de la turbomachine (i.e. la section d'éjection). Selon la configuration envisagée, ce système de commande se compose d'un ou de plusieurs vérins de commande associés à une cinématique plus ou moins complexe mettant par exemple en oeuvre des leviers de commande et des chapes de liaison rotulantes.

La présente invention concerne plus précisément une tuyère à section variable du type dont les leviers de commande des volets mobiles se composent à la fois de leviers commandés qui sont directement actionnés par des vérins et de leviers suiveurs qui ne sont pas actionnés directement par des vérins mais par les leviers commandés au moyen des chapes de liaison rotulantes qui transmettent la cinématique de déplacement des volets. Une telle tuyère est décrite dans le document EP 1 503 068.

Avec ce type de tuyère à section variable, il a été constaté, qu'en fonctionnement (et notamment à plein régime de fonctionnement de la turbomachine équipée d'une telle tuyère), tous les volets mobiles formant la couronne ne se retrouvaient pas sur le même diamètre. Il en résulte, pendant le fonctionnement de la tuyère, des fuites importantes entre les volets adjacents qui sont dues aux décalages dans le braquage des différents volets mobiles. De telles fuites sont particulièrement préjudiciables aux performances de la turbomachine (poussée, consommation spécifique, etc.).

### Objet et résumé de l'invention

La présente invention a donc pour but principal de pallier de tels inconvénients en proposant une tuyère à section variable permettant de diminuer en fonctionnement les fuites entre les volets adjacents et d'améliorer ainsi les performances de la turbomachine équipée d'une telle tuyère.

A cet effet, il est prévu une tuyère à section variable de turbomachine, comportant une pluralité de volets mobiles, un système de commande des volets mobiles comportant des leviers de commande chacun associés à un volet mobile, les leviers de commandes se composant de leviers commandés qui sont actionnés directement par des vérins et de leviers suiveurs qui sont actionnés par les leviers commandés par l'intermédiaire de liaisons de transmission, caractérisée en ce que, à l'arrêt de la tuyère, les volets associés aux leviers suiveurs présentent un décalage radial par rapport aux volets associés aux leviers commandés.

Avec un tel décalage radial entre les différents types de volets, lorsque la tuyère est en fonctionnement, les volets mobiles formant la couronne de la tuyère se retrouvent alors sur un même diamètre et tout risque de fuite entre les volets adjacents est ainsi écarté. Cette modification de la tuyère reste par ailleurs simple et peu coûteuse.

Selon une caractéristique particulière de l'invention, à l'arrêt de la tuyère, les volets mobiles associés aux leviers suiveurs présentent un décalage radial vers l'intérieur de la tuyère par rapport aux volets mobiles associés aux leviers commandés.

Selon une autre caractéristique particulière de l'invention, le décalage radial des volets mobiles associés aux leviers suiveurs est réalisé en modifiant l'usinage des leviers suiveurs.

Le système de commande des volets mobiles peut comporter autant de leviers commandés que de leviers suiveurs.

La présente invention a également pour objet une turbomachine équipée d'une tuyère à section variable telle que définie précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue partielle en perspective d'une tuyère à section variable selon l'invention ;
- la figure 2 est vue partielle de face de la tuyère de la figure 1 à l'arrêt ;
- la figure 3 est une partielle de face de la tuyère de la figure 1 en fonctionnement à plein régime ; et
- la figure 4 est une vue en coupe transversale d'un levier de commande suiveur de la tuyère selon l'invention.

### Description détaillée d'un mode de réalisation

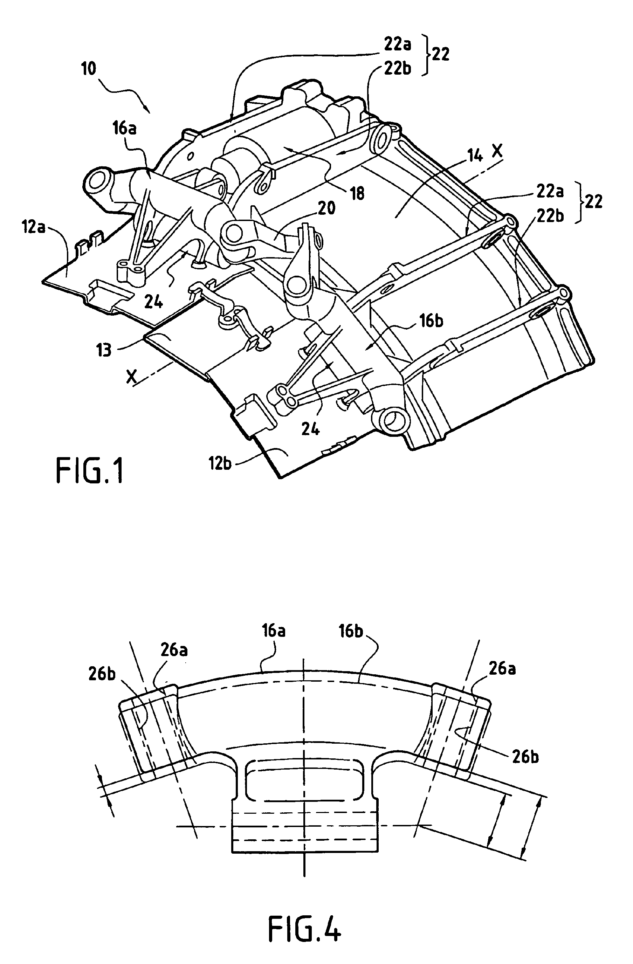

La figure 1 représente partiellement une tuyère 10 à section variable de turbomachine selon l'invention.

La tuyère 10 d'axe X-X comporte notamment une pluralité de volets mobiles commandés 12a, 12b et de volets mobiles suiveurs 13 qui sont montés sur une extrémité aval d'un carter annulaire 14 de la turbomachine centré sur l'axe X-X. Les volets commandés 12a, 12b et suiveurs 13 forment ainsi une couronne.

Les volets mobiles commandés 12a, 12b sont actionnés directement par un système de commande de manière à modifier le profil du flux primaire (i.e. la section d'éjection) de la turbomachine.

Le système de commande des volets commandés 12a, 12b comporte des leviers de commande 16a, 16b chacun associés à un volet mobile 12a, 12b respectif et au moins un vérin d'actionnement 18 des leviers de commande. Chaque levier de commande 16a, 16b est fixé au volet mobile 12a, 12b qu'il commande.

Plus particulièrement, sur l'exemple de la figure 1, un seul vérin 18 permet d'actionner à la fois deux leviers de commande 16a, 16b. En effet, le vérin 18 actionne de façon directe un premier levier de commande, dit levier commandé 16a, et de façon indirecte un second levier de commande, dit levier suiveur 16b, par l'intermédiaire d'une liaison de transmission 20 de type chape rotulante reliant le levier suiveur 16b au levier commandé 16a.

De la sorte, le système de commande des volets mobiles comporte autant de leviers de commande commandés 16a que de leviers de commande suiveurs 16b. Lorsque la tuyère se compose par exemple d'une couronne de dix volets commandés 12a, 12b, cinq vérins 18 suffisent alors à actionner l'ensemble de ces volets mobiles.

Bien entendu, d'autres configurations sont possibles. Par exemple, il est possible d'imaginer qu'un seul vérin actionne plus de deux leviers de commande à la fois, les leviers de commande suiveurs étant actionnés par l'intermédiaire de liaisons de transmission.

Quant aux volets suiveurs 13, ils sont disposés radialement à l'intérieur des volets commandés 12a, 12b et prennent appui sur les volets commandés adjacents. Ils sont ainsi destinés à assurer la continuité et l'étanchéité de la veine primaire pendant le fonctionnement de la tuyère et cela quelque soit sa section d'ouverture.

On notera que la tuyère comporte également une pluralité de supports 22 pour chaque levier de commande 16a, 16b. De tels supports 22 se présentent sous la forme d'une paire de bras ou attelles 22a, 22b sensiblement parallèles et s'étendant selon l'axe X-X de la tuyère. Ces bras 22a, 22b sont fixés, d'une part au carter 14 à leur extrémité amont, et d'autre part aux leviers de commande 16a, 16b à leur extrémité aval par des bobines 24.

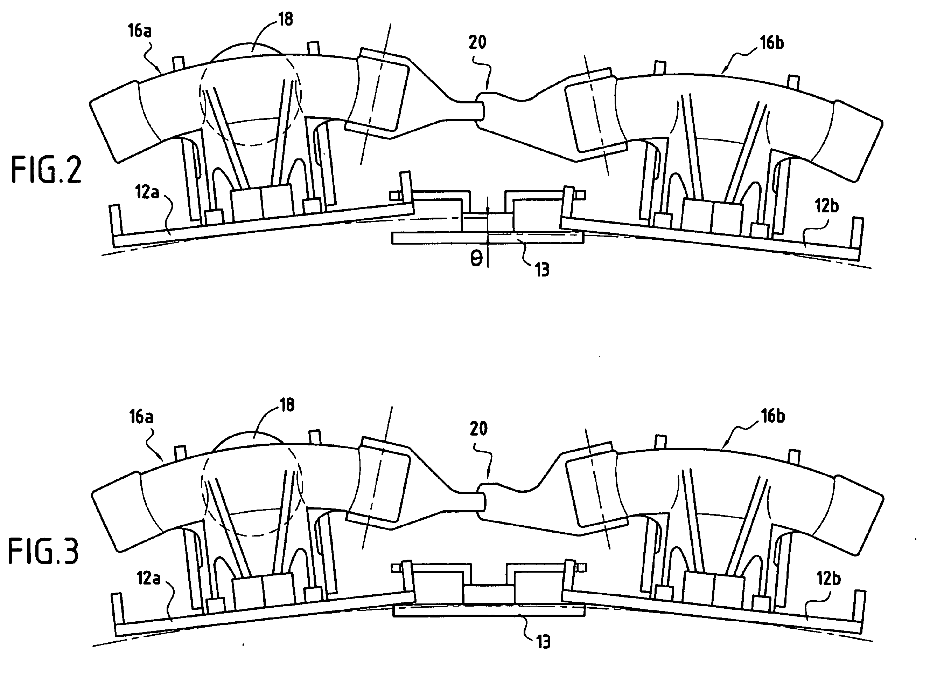

Les figures 1 et 2 représentent sous différentes vues la tuyère 10 telle que décrite ci-dessus dans un état à l'arrêt (c'est-à-dire pas de fonctionnement ou au repos). Dans un tel état, les volets 12b associés aux leviers de commande suiveurs 16b présentent un décalage radial θ (figure 2) par rapport aux volets 12a associés aux leviers commandés 16a.

Plus précisément, sur l'exemple des figures 1 et 2, le décalage radial θ à l'arrêt de la tuyère des volets 12b associés aux leviers de commande suiveurs 16b par rapport aux autres volets 12a est dirigé vers l'intérieur de la tuyère 10.

En d'autres termes, à l'arrêt de la tuyère, les volets 12b associés aux leviers de commande suiveurs 16b sont situés sur un diamètre plus faible que celui sur lequel sont situés les volets 12a associés aux leviers commandés 16a.

Par ailleurs, on peut remarquer que le volet suiveur 13 disposé entre les volets 12a et 12b adjacents représentés sur ces figures 1 et 2 se retrouve en appui uniquement sur le volet 12b associé au levier de commande suiveur 16b. Ceci est dû au fait que ce volet 12b se situe sur un diamètre plus petit que celui sur lequel se situe le volet 12a adjacent.

La figure 3 représente en vue de face la tuyère 10 en fonctionnement (ce fonctionnement peut par exemple correspondre au régime « plein gaz »).

Sur cette figure, on constate que le décalage radial entre les volets 12b associés aux leviers de commande suiveurs 16b et les volets 12a associés aux leviers commandés 16a a disparu. Les volets 12a et 12b adjacents de la figure 3 se retrouvent sur un même diamètre et le volet suiveur 13 est alors en appui à la fois sur le volet 12a et sur le volet 12b. De la sorte, tout risque de fuite entre les volets adjacents est écarté.

L'introduction d'un décalage radial θ entre les différents volets de la tuyère selon qu'ils soient associés à des leviers suiveurs 16b ou commandés 16a provient d'une étude de la cinématique de la tuyère.

Il a notamment été constaté que les niveaux d'efforts ainsi que les directions d'efforts repris au niveau des supports 22 de levier de commande ne sont pas les mêmes selon qu'il s'agisse de volets 12a associés aux leviers commandés 16a ou de volets 12b associés aux leviers suiveurs 16b. De plus, la cinématique (c'est-à-dire la déformation des pièces) est rendue moins importante par l'absence de reprise d'efforts sur les leviers suiveurs 16b.

De telles différences ont comme conséquence que les jeux ne sont pas repris de la même manière selon qu'il s'agisse de volets 12a associés aux leviers commandés 16a ou de volets 12b associés aux leviers suiveurs 16b.

En outre, étant donné qu'en fonctionnement de la tuyère les supports 22 de levier de commande et le carter 14 ne se déforment pas de la manière selon qu'ils comportent un vérin ou non, un décalage se créé au niveau de la position des bobines 24.

Enfin, la déformation de la cinématique (c'est-à-dire des leviers de commande 16a, 16b et des liaisons de transmission 20) est différente entre les leviers suiveurs 16b et les leviers commandés 16a.

Toutes ces différentes constatations ont ainsi permis de conclure que, sans décalage radial à l'arrêt de la tuyère, les volets 12b de la tuyère associés à des leviers suiveurs 16b se retrouvent en fonctionnement sur un diamètre plus important que les volets 12a associés aux leviers commandés 16a, créant un décalage entre les volets adjacents source de fuites.

Le décalage radial θ appliqué aux volets 12b de la tuyère associés aux leviers suiveurs 16b est calculé de façon à ce qu'en fonctionnement, les volets 12b de la tuyère se retrouvent sur le même diamètre que les volets 12a associés aux leviers commandés 16a. A titre d'exemple, un tel décalage radial peut être de l'ordre de 10 à 15 mm environ.

Selon une caractéristique avantageuse de l'invention illustrée par la figure 4, le décalage radial θ des volets 12b associés aux leviers de commande suiveurs 16b est réalisé en modifiant l'usinage des leviers suiveurs 16b.

Sur la figure 4 sont représentés un levier commandé 16a (en traits pleins) et un levier suiveur 16b (en pointillés). Ces leviers de commande 16a, 16b sont chacun pourvus à leurs extrémités angulaires opposées d'orifices 26a, 26b (ou tonneaux) pour la fixation des chapes rotulantes formant les liaisons de transmission.

Selon qu'il s'agisse de leviers commandés ou de leviers suiveurs, ces orifices 26a, 26b sont usinés de manière différente afin de conférer aux volets associés aux leviers suiveurs le décalage radial requis.

En effet, sur la figure 4, on remarque bien que l'usinage des orifices 26b du levier suiveur 16b est décalé radialement vers l'intérieur de la tuyère par rapport à l'usinage des orifices 26a du levier commandé 16a. Un tel décalage dans l'usinage de orifices 26a, 26b suffit à créer un décalage radial vers l'intérieur de la tuyère entre les volets 12a et 12b.

La réalisation du décalage radial θ entre les volets 12a et 12b par la modification de l'usinage des leviers suiveurs 16b est une opération simple et peu coûteuse qui présente l'avantage de ne pas avoir à transformer d'autres pièces de la tuyère. Par ailleurs, très peu de modifications sont apportées aux leviers : le corps principal de celui-ci reste identique pour les leviers suiveurs et les leviers commandés.

## Revendications

1. Tuyère à section variable (10) de turbomachine, comportant une pluralité de volets mobiles (12a, 12b, 13), un système de commande des volets mobiles comportant des leviers de commande (16a, 16b) chacun associés à un volet mobile (12a, 12b), les leviers de commandes (16a, 16b) se composant de leviers commandés (16a) qui sont actionnés directement par des vérins (18) et de leviers suiveurs (16b) qui sont actionnés par les leviers commandés (16a) par l'intermédiaire de liaisons de transmission (20), **caractérisée en ce que**, à l'arrêt de la tuyère, les volets (12b) associés aux leviers suiveurs (16b) présentent un décalage radial (θ) par rapport aux volets (12a) associés aux leviers commandés (16a).

2. Tuyère selon la revendication 1, **caractérisée en ce que**, à l'arrêt de la tuyère, les volets mobiles (12b) associés aux leviers suiveurs (16b) présentent un décalage radial (θ) vers l'intérieur de la tuyère par rapport aux volets mobiles (12a) associés aux leviers commandés (16a).

3. Tuyère selon l'une des revendications 1 et 2, **caractérisée en ce que** le décalage radial (θ) des volets mobiles (12b) associés aux leviers suiveurs (16b) est réalisé en modifiant l'usinage desdits leviers suiveurs (16b).

4. Tuyère selon l'une quelconque des revendications 1 à 3, **caractérisée en ce que** le système de commande des volets mobiles (12a, 12b) comporte autant de leviers commandés (16a) que de leviers suiveurs (16b).

5. Turbomachine **caractérisée en ce qu**'elle comporte une tuyère (10) à section variable selon l'une quelconque des revendications 1 à 4.

## Claims

1. A variable-section turbomachine nozzle (10) comprising a plurality of moving flaps (12a, 12b, 13), and a moving flap control system comprising control levers (16a, 16b) each associated with a respective moving flap (12a, 12b), the control levers (16a, 16b) comprising both controlled levers (16a) that are actuated directly by actuators (18), and follower levers (16b) that are actuated by the controlled levers (16a) via transmission links (20), the nozzle being **characterised in that**, when the nozzle is at rest, the flaps (12b) associated with the follower levers (16b) present a radial offset (θ) relative to the flaps (12a) associated with the controlled levers (16a).

2. A nozzle according to claim 1, **characterised in that**, when the nozzle is at rest, the moving flaps (12b) associated with the follower levers (16b) present a radial offset (θ) towards the inside of the nozzle relative to the moving flaps (12a) associated with the controlled levers (16a).

3. A nozzle according to claim 1 or claim 2, **characterised in that** the radial offset (θ) of the moving flaps (12b) associated with the follower levers (16b) is obtained by modifying the machining of said follower levers (16b).

4. A nozzle according to any one of claims 1 to 3, **characterised in that** the control system for the moving flaps (12a, 12b) comprises as many controlled levers (16a) as it comprises follower levers (16b).

5. A turbomachine, **characterised in that** it includes a variable-section nozzle (10) according to any one of claims 1 to 4.

## Patentansprüche

1. Düse mit variablem Querschnitt (10) einer Turbomaschine, mit einer Vielzahl von beweglichen Klappen (12a, 12b, 13), einem System zum Steuern der beweglichen Klappen, das Steuerhebel (16a, 16b) umfaßt, die jeweils einer beweglichen Klappe (12a, 12b) zugeordnet sind, wobei die Steuerhebel (16a, 16b) aus gesteuerten Hebeln (16a), die direkt durch Zylinder (18) bestätigt werden, und aus Folgehebeln (16b), die mittels Übertragungsverbindungen (20) über die gesteuerten Hebel (16a) betätigt werden, bestehen, **dadurch gekennzeichnet, daß** bei Stillstand der Düse die den Folgehebeln (16b) zugeordneten Klappen (12b) einen radialen Versatz (θ) gegenüber den den gesteuerten Hebeln (16a) zugeordneten Klappen (12a) aufweisen.

2. Düse nach Anspruch 1, **dadurch gekennzeichnet, daß** bei Stillstand der Düse die den Folgehebeln (16b) zugeordneten beweglichen Klappen (12b) einen radialen Versatz (θ) zur Innenseite der Düse gegenüber den den gesteuerten Hebeln (16a) zugeordneten beweglichen Klappen (12a) aufweisen.

3. Düse nach einem der Ansprüche 1 und 2, **dadurch gekennzeichnet, daß** der radiale Versatz (θ) der den Folgehebeln (16b) zugeordneten beweglichen Klappen (12b) **dadurch** erzeugt wird, daß die Bearbeitung der Folgehebel (16b) geändert wird.

4. Düse nach irgendeinem der Ansprüche 1 bis 3, **dadurch gekennzeichnet, daß** das System zum Steuern der beweglichen Klappen (12a, 12b) genauso viele gesteuerte Hebel (16a) wie Folgehebel (16b) umfaßt.

5. Turbomaschine, **dadurch gekennzeichnet, daß** sie eine Düse (10) mit variablem Querschnitt nach irgendeinem der Ansprüche 1 bis 4 umfaßt.
